Europäisches Patentamt

European Patent Office

Office européen des brevets

(19)

(11) Numéro de publication: **0 150 643**
**B1**

(12) # FASCICULE DE BREVET EUROPEEN

(45) Date de publication du fascicule du brevet:
**07.01.88**

(21) Numéro de dépôt: **84402579.1**

(22) Date de dépôt: **13.12.84**

(51) Int. Cl.⁴: **F 16 K 5/06,** E 21 B 34/02,
E 21 B 34/04, E 21 B 29/08,
E 21 B 29/04

(54) **Vanne de sécurité, en particulier pour fermer un puits de pétrole.**

(30) Priorité: **28.12.83 FR 8320955**

(43) Date de publication de la demande:
**07.08.85 Bulletin 85/32**

(45) Mention de la délivrance du brevet:
**07.01.88 Bulletin 88/1**

(84) Etats contractants désignés:
**BE DE GB IT NL**

(56) Documents cités:
**US - A - 3 870 101**
**US - A - 4 009 753**
**US - A - 4 331 315**

(73) Titulaire: **FLOPETROL SERVICES INC., Woodlands Drive
Building 24 Kirkhill Industrial Estate, Dyce Aberdeen,
AB2 0ES (GB)**

(72) Inventeur: **Dorémus, Bernard, 32 bis, rue Schuman,
F-77830 Echouboulains Melun (FR)**

(74) Mandataire: **Hagel, Francis, Service Brevets ETUDES ET
PRODUCTIONS SCHLUMBERGER B.P. 202,
F-92142 Clamart Cédex (FR)**

## Description

L'invention concerne une vanne de sécurité, pouvant opérer sous haute pression et en présence d'un fort débit. Elle s'applique particulièrement, mais non exclusivement, aux vannes qui sont mises en place notamment en tête de puits d'hydrocarbures afin d'en assurer la fermeture pour des raisons de sécurité.

Il est connu d'utiliser des vannes à boisseaux sphériques, y compris comme vannes de sécurité en tête de puits. Dans leur structure générale, ces vannes comportent un corps de vanne de forme générale cylindrique, un boisseau sphérique guidé à pivotement dans ce corps autour d'un axe perpendiculaire à celui de son perçage, des moyens de commande comprenant une chemise coulissante propre à déplacer le boisseau sphérique entre une position d'ouverture et une position de fermeture, et deux portées percées, propres à définir un passage dans le corps de vanne avec le perçage du boisseau lorsque ce dernier est dans sa position d'ouverture.

Cependant, les vannes connues présentent différentes inconvénients. Tout d'abord, comme il est décrit dans le brevet US-A-3,870,101, elles font appel la plupart du temps à deux étriers entourant le boisseau sphérique, et chargés l'un d'assurer son soutien à pivotement, et le second son actionnement entre les positions ouverte et fermée. Cette disposition conduit à un diamètre extérieur de la vanne important.

De plus, avec un mécanisme à deux étriers du genre indiqué ci-dessus, le bras de levier disponible pour la commande du boisseau sphérique est assez faible.

On mesurera mieux la portée de cet inconvénient après avoir remarqué qu'une vanne de sécurité pour puits doit pouvoir opérer sous 700 bars de pression ou plus, avec un fort débit correspondant à un passage intérieur de 7,62 centimètres (3 pouces). Disposant d'un faible bras de levier pour la commande d'une telle vanne, il est nécessaire de prévoir pour son actionnement une pression hydraulique importante.

Un autre problème est rencontré dans le cas particulier des vannes de sécurité: lors de leur actionnement, celles-ci doivent pouvoir sectionner différents types de câbles et tubulures qui ont été introduits à travers le boisseau sphérique.

La présente invention vient permettre de résoudre ces problèmes.

Une vanne, selon l'invention, comprend les éléments énumérés dans la revendication 1.

On peut ainsi obtenir un important bras de levier, en particulier lorsque la barre est positionnée pour se trouver en limite de contact avec l'échancrure du boisseau sphérique, lorsque celui-ci est dans sa position de fermeture.

Selon un mode particulier de réalisation, le boisseau sphérique est incliné dans sa position de fermeture. En d'autres termes, l'un des points de la portée qui demeure au contact de ce boisseau sphérique est alors au voisinage immédiat d'un bord du perçage de ce même boisseau sphérique. Ceci permet de limiter la course nécessaire à la rotation du boisseau et par conséquant la longeur de la vanne.

Enfin, selon un second mode particulier de réalisation, le boisseau sphérique et la portée solidaire de la chemise sont agencés pour coopérer à la façon d'une cisaille lors de la fermeture de la vanne.

D'autres caractéristiques et avantages de l'invention apparaîtront à l'examen de la description détaillée qui va suivre, et des dessins annexés, sur lesquels:
– la figure 1 est une vue générale en coupe longitudinale verticale d'une vanne selon la présente invention;
– les figures 2A à 2C sont des coupes partielles, légèrement agrandies par rapport à la figure 1, et illustrant trois positions du boisseau sphérique;
– la figure 3 est une vue en coupe également agrandie par rapport à la figure 1, et montrant plus en détail les moyens de commande de la vanne; et
– les figures 4A et 4B sont respectivement une vue en coupe suivant la ligne A-A de la figure 2A et une vue partielle latérale correspondante, permettant de mieux comprendre la disposition du boisseau sphérique dans le corps de vanne.

Le mode de réalisation décrit et représenté concerne une vanne normalement fermée. Cependant, les principes de la présente invention s'appliquent tout aussi bien à une vanne normalement ouverte.

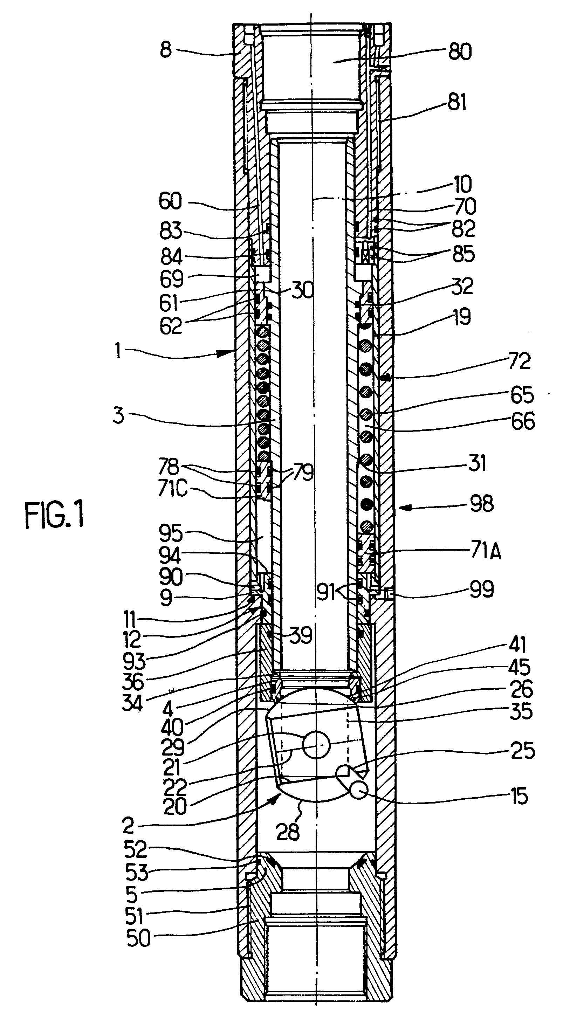

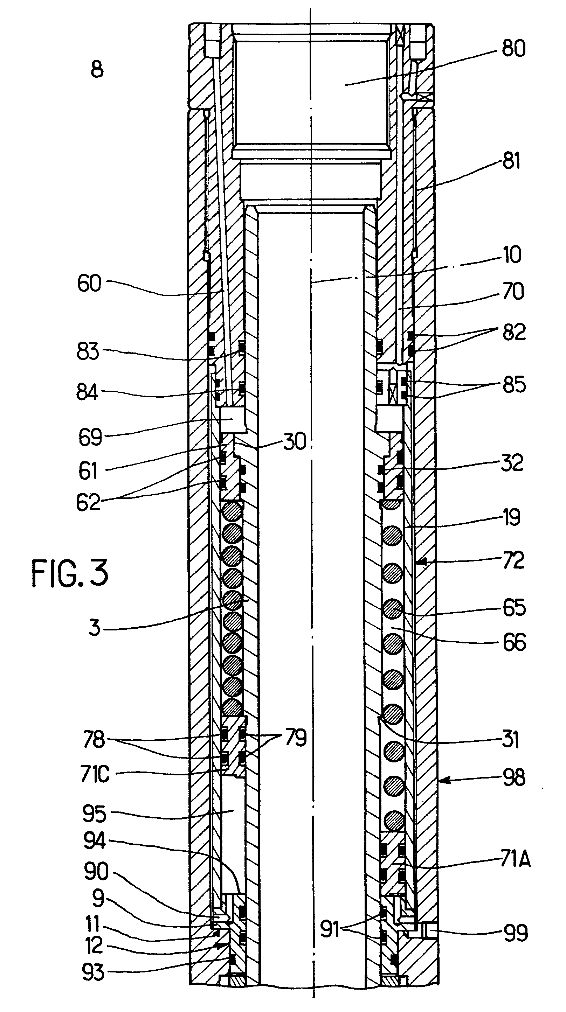

Il est maintenant fait référence aux figures 1 à 3. La vanne comprend un corps de vanne 1 de forme générale cylindrique. En partie supérieure, le corps de vanne reçoit un embout 8 qui vient en prise sur le corps de vanne 1 par un filetage 81. Dans cet embout 8 est ménagé un passage axial alésé 80. Dans sa partie basse, ce passage 80 guide une chemise de commande 3, qui est également de forme générale cylindrique. Des joints 83 et 84 assurent une étanchéité entre l'embout 8 et la chemise 3. Extérieurement, la partie baisse de l'embout 8 est également munie de joints 82 assurant l'étanchéité de la paroi interne du corps de vanne 1. Enfin, l'embout 8 est traversé axialement par deux conduits 60 et 70, qui servent respectivement à commander l'ouverture et la fermeture de la vanne.

Plus bas, le corps de vanne définit intérieurement un épaulement 11. Cet épaulement reçoit en butée une bague 9, alésée intérieurement pour recevoir avec une étanchéité 91 l'extrémité basse de la chemise 3. Sous l'épaulement 11, le corps définit une saillie annulaire alésée 12, qui guide la bague 9 avec interposition d'une échantéité 93. Ce guidage est réalisé de telle sorte qu'au-dessus de l'épaulement 11, il subsiste un jeu périphérique autour de la bague 9, entre celle-ci et le corps 1. Un conduit 90 part du mince espace annulaire défini par ce jeu, pour aboutir dans la face supérieure 94 de la bague 9.

Par ailleurs, la bague 9 est maintenue en place par une chemise fixe 19, qui s'appuie sur cette même bague à son extrémité basse. En haut, la chemise 19 se termine par un amincissement venant se loger avec une étanchéité 85 sur le bas de l'embout 8. Là encore, un jeu subsiste entre la paroi externe de la chemise fixe 19 et le corps de vanne 1. Ce jeu définit une conduite annulaire communiquant vers le haut avec le conduit de commande de fermeture 70, et vers le bas avec la tubulaire 90. Les étanchéités 82 à 85 ainsi que 93 assurent l'absence de fuite dans ce passage de communication annulaire.

La chemise de commande 3 comporte un épaulement annulaire fileté 30, tourné vers l'extérieur, sur lequel vient se fixer un premier piston annulaire 61. Une étanchéité 32 est prévue entre ce premier piston et la chemise 3. Le piston 61 coulisse à l'intérieur de la chemise fixe 19 du corps de vanne 1, avec interposition d'une étanchéité 62.

Le conduit de commande d'ouverture de la vanne, notée 60, débouche dans le cylindre annulaire 69 défini au-dessus du premier piston 61.

Au-dessous de ce premier piston 61, une cavité annulaire 66 est définie entre la chemise fixe 19 et la chemise de commande 3. Cette cavité est délimitée vers le bas par un second piston annulaire 71, muni de part et d'autre d'étanchéités 78 et 79. Sur la figure 1, le piston 71 est illustré en deux positions différentes 71A et 71C, dont on verra plus loin la signification. Le mouvement de ce second piston 71 vers le haut, par rapport à la chemise de commande 3, est limité par un épaulement 31 que porte cette même chemise.

En sa position 71C, le second piston est en butée sur cet épaulement 31. Un second cylindre annulaire 95 est alors défini sous le piston 71, et ce cylindre communique avec la tubulure 90 déjà citée.

Sur le bas de la chemise de commande 3 est vissé un embout annulaire 36, avec interposition d'une étanchéité 39. La chemise 3 bute sur un épaulement radial 34 de cet embout. Sous cet épaulement est montée une portée 4, également annulaire, coaxiale à la chemise 3, et percée d'un alésage correspondant à celui de la chemise. Une étanchéité 40 est prévue entre la périphérie externe de la portée 4 et l'embout 36.

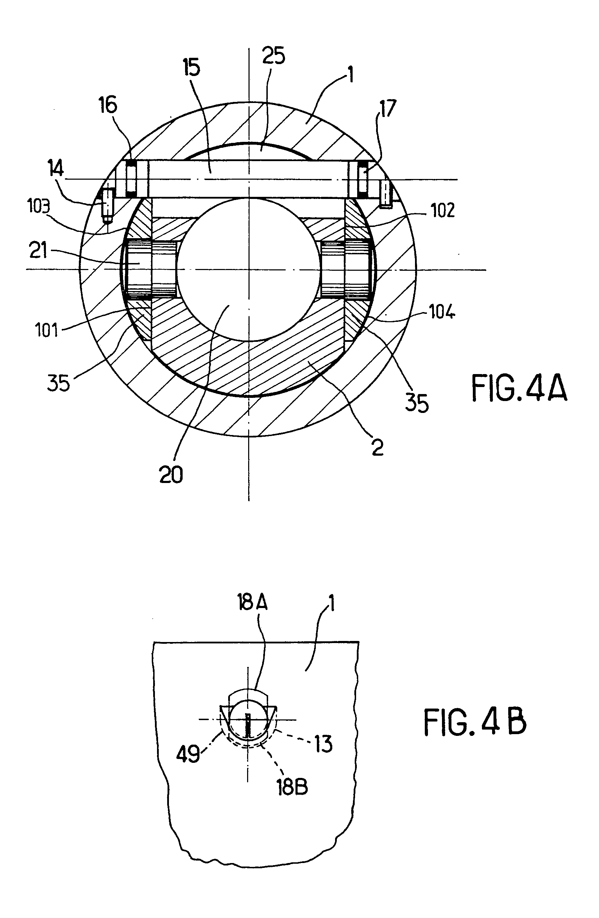

Cet embout comporte encore deux prolongements vers le bas formant un étrier 35. La figure 4A montre comment cet étrier 35 est muni de doigts 21, qui lui permettent de supporter à rotation le boisseau sphérique 2. Celui-ci est muni d'un perçage alésé 20, d'axe 22. Le boisseau sphérique comporte deux méplats 101 et 102, perpendiculaires à l'axe de pivotement 21 du boisseau et qui coopèrent avec les deux étriers 35. Ces derniers ont chacun, en plus de leur surface plane coopérant avec le méplat 101 ou 102, une surface 103 ou 104 correspondant à une partie de cylindre de diamètre égal au diamètre externe du boisseau sphérique. Il en résulte que ce dernier diamètre est avantageusement pratiquement égal, mais légèrement inférieur, au diamètre interne du corps de vanne 1. Dans la position de fermeture, la calotte supérieure 29 du boisseau est maintenue en légère précontrainte sur l'étanchéité correspondante 45 de la portée 4. A gauche de la figure 1, le bord extrême de l'alésage 20 est normalement chanfreiné. A droite, le bord de l'alésage est à peine chanfreiné, de manière à être coupant. En correspondance, la portée 4 présente, dans sa partie au contact du boisseau sphérique, une saillie pointue 41, qui pourra former une cisaille avec le bord coupant du boisseau sphérique 2. Une échancrure fraisée 25 est ménagée radialement dans la calotte inférieure 28 du boisseau sphérique 2. Cette échancrure s'étend sur toute la largeur du boisseau sphérique, parallèlement à son axe de pivotement 21. Elle loge une barre traversante fixe 15, montée également parallèle à l'axe de pivotement 21 du boisseau sphérique, et de manière décentrée par rapport à celui-ci.

Enfin, en partie basse, le corps de vanne 1 reçoit un embout inférieur 50, qui lui est vissé en 51. Cet embout définit la seconde portée 5 de la vanne. Une étanchéité est de préférence définie en 52 avec le boisseau sphérique, et en 53 avec la périphérie du corps de vanne.

Avantageusement, le logement 66 du ressort est rempli d'azote sous pression. Ce remplissage s'effectue à partir d'un orifice latéral 99 placé au niveau de l'épaulement 11. Lors du montage du corps de vanne, on termine par la mise en place de la chemise fixe 19 et de l'embout supérieur 8. L'extrémité de la chemise 19 n'est qu'incomplètement rentrée, s'arrêtant par exemple au niveau de la flèche 98. On met alors sous pression l'espace 66 par de l'azote introduit par le bouchon 99. Cet azote passe dans l'évidement annulaire prévu autour de la bague 9 et remonte par là jusqu'au logement 66, puisque la chemise 19 ne l'obture pas encore. La chemise 19 est ensuite mise en place par l'embout supérieur 8. L'alimentation en azote peut alors être débranchée de l'orifice 99. L'azote injecté dans la chambre 66 est piégé par les étanchéités 78, 79, 62 et 32.

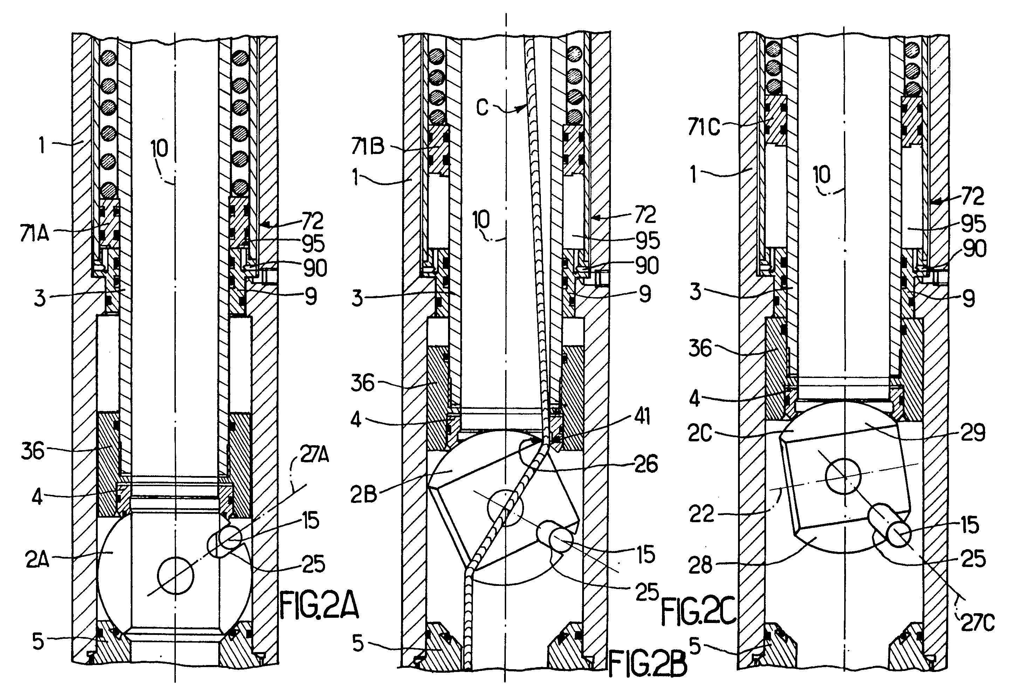

La figure 2A illustre la vanne de sécurité dans la position d'ouverture. Le boisseau sphérique 2A est ici au contact de ses deux portées 4 et 5. Comme l'écranchure 25 aboutit dans le perçage 20 de ce boisseau, l'espace qui entoure le boisseau sphérique est également rempli de fluide. Mais ce fluide est arrêté par les étanchéités prévues en 39, 93 et 53. Dans cette position, le second piston annulaire est dans sa position inférieure 71A, et le premier piston annulaire 61 (non représenté sur la figure 2A) a fait avancer la chemise de commande 3 vers le bas, par application d'une pression de fluide dans le cylindre 69 à travers la tubulure 60.

Lorsqu'on cesse d'appliquer la pression dans le conduit 60, pour la transmettre au contraire au conduit de fermeture 70, le piston 71B, qui est en butée sur l'épaulement 31 de la chemise de commande 3, fait remonter celle-ci vers le haut. L'étrier 35 rendu solidaire de la chemise 3 par son embout 36 sollicite alors vers le haut l'axe de pivotement du boisseau sphérique 2. Le boisseau est ainsi animé d'un mouvement de translation/rotation qui le fait pivoter autour de la barre 15. La figure 2B montre que la calotte supérieure du boisseau 2 glisse sur la partie gauche de la portée supérieure 4. Lorsqu'on arrive presque à la position de fermeture, les arêtes 26 et 41 peuvent sectionner différents équipements descendus dans le puits, comme un câble C, ou une tubulure. Il peut s'agir d'un petit câble électrique mono-brin ou multi-brins, ou encore d'un tube mince (par exemple 2,5 cm de diamètre extérieur pour 3 mm d'épaisseur).

Après ces éventuelles opérations de sectionnement, le boisseau sphérique arrive dans sa position de fermeture 2C, illustrée sur la figure 2C. Cette position est légèrement inclinée. On voit aussi que le fluide de commande appliqué au cylindre annulaire inférieur 95 a fait remonter complètement le second piston annulaire en 71C.

La figure 1 montre encore que la pression de fluide à maîtriser régnant à l'intérieur de la vanne facilite sa fermeture. En effet, le diamètre externe de la chemise 3 au niveau de la chambre 69 est légèrement inférieur (d'environ 2 mm) à celui de la chemise 3 au riveau du joint 39. La pression de fluide à maîtriser tend donc elle aussi à faire remonter la chemise 3 vers le haut.

L'examen des figures 2A à 2C permet de percevoir différentes autres caractéristiques de l'invention:

– Dans la position fermée du boisseau sphérique, la barre 15 se trouve en limite de contact avec l'échancrure 25 de ce boisseau sphérique.

– La figure 2C montre qu'en position de fermeture, l'un des points de la portée 4 est au voisinage immédiat d'un bord 26 du perçage 20 du boisseau sphérique 2.

– Dans la même position, l'axe 22 du perçage 20 du boisseau forme un angle d'environ 10° avec la section droite du corps de vanne (9° sur la figure 2C), où l'angle entre l'axe du perçage du boisseau et le plan radial passant par l'axe de la barre 15 est, pour sa part, de 55°.

– Le diamètre extérieur du boisseau sphérique 2 est sensiblement égal au diamètre intérieur du corps de vanne cylindrique 1, aucune pièce mobile n'étant interposée entre les deux.

– Dans la position d'ouverture de la vanne (figure 2A), la barre 15 vient très près de la portée 4 qui se trouve solidaire de la chemise 3.

On remarque encore sur la figure 2C que c'est la calotte 29 du boisseau sphérique qui supporte les contraintes liées à la pression de fluide existant lors de la fermeture. Au contraire, la calotte inférieure 28, qui porte l'échancrure 25, n'est pratiquement pas soumise à ces contraintes.

Un autre aspect important de l'invention est la solidité de la barre 15 et de sa fixation dans le corps de vanne. Cette fixation est illustrée sur les figures 4A et 4B. Le corps de vanne 1 comporte deux perçages cylindriques propres à recevoir les extrémités de la barre 15. A gauche, une goupille 14 est vissée dans le corps de vanne pour former un arrêt en rotation de la barre 15, qui comporte un joint torique d'étanchéité 16. Compte tenu de la position de la goupille 14, l'extrémité gauche de la barre 15 est usinée pour se conformer au profil externe du corps de vanne 1. A droite, l'extrémité de la barre 15 comporte un second joint torique d'étanchéité 17. Plus à droite, la barre est munie d'une languette 18 formant épaulement en saillie. Le profil externe de cette languette est en arc, la longueur de cet arc étant de l'ordre de 90°. Au moment de la mise en place de la barre 15, la languette 18 est dans sa position 18A. On la fait ensuite tourner de 180° pour l'amener à la position 18B, où elle s'engage dans une échancrure annulaire correspondante 49 du corps de vanne 1. Enfin, dans la position définitive de la barre 15, son bord de droite épouse en continuité le profil externe cylindrique du corps de vanne 1. La barre 15 est arrêtée en rotation par la goupille 14.

La vanne selon la présente invention offre en particulier les avantages suivants:

– corps de vanne monobloc, dont l'alésage intérieur cylindrique est utilisé au maximum, et totalement rempli par le boisseau sphérique;

– obtention d'un bras de levier important pour la commande du boisseau sphérique, par l'interaction de la barre 15 et de l'échancrure 25.

– Fonction de fermeture de la vanne réalisée par la calotte sphérique 29, qui n'est pas usinée, alors que c'est l'autre calotte sphérique 28 qui reçoit l'échancrure 25.

– Excellentes caractéristiques mécaniques notamment pour travailler à haute pression et sous fort débit, tout en conservant un encombrement réduit.

**Revendications:**

1. Vanne, en particulier pour fermer un puits, du type comprenant:
– un corps de vanne (1),
– un boisseau sphérique (2) guidé à pivotement dans ce corps autour d'un axe (21) perpendiculaire à celui de son perçage(20),
– des moyens de commande, comprenant une chemise coulissante (3) propre à coulisser dans le corps de vanne (1) entre une position d'ouverture (2A) et une position de fermeture (2C) de la vanne, et à supporter le boisseau sphérique, et
– deux portées percées (4, 5) dont l'une (4) restant au contact du boisseau (2), est solidaire de la chemise coulissante (3) et étanche par rapport au corps de vanne (1), ces deux portées (4, 5) étant propres à définir un passage dans le corps de vanne avec le perçage (20) du boisseau lorsque la vanne est dans sa position d'ouverture (2A),
caractérisée en ce qu'il est prévu, à proximité du boisseau sphérique, une barre traversante (15) fixée dans le corps de vanne et montée parallèlement à l'axe de pivotement (21) du boisseau sphérique, de manière décentrée par rapport à celui-ci, et en ce que le boisseau sphérique (2) comporte une échancrure radiale (25) qui s'étend parallèlement à son axe de pivotement (21) sur toute sa largeur, la barre (15) et l'échancrure (25) restant en coopération de came réversible lors du mouvement de la chemise entre la position d'ouverture et la position de fermeture et leur mouvement relatif de translation entraînant le pivotement du boisseau autour de son axe.

2. Vanne selon la revendication 1, caractérisée en ce que, dans la position de fermeture de la vanne, l'un (45) des points de la portée (4) qui demeure au contact du boisseau sphérique est au voisinage immédiat d'un bord (26) du perçage (20) de ce même boisseau sphérique (2).

3. Vanne selon l'une des revendications 1 et 2, caractérisée en ce que la barre (15) est positionnée pour se trouver en limite de contact avec l'échancrure (25) du boisseau sphérique, lorsque la vanne est dans sa position de fermeture ou dans sa position d'ouverture.

4. Vanne selon l'une des revendications précédentes, caractérisée en ce que, dans la position de fermeture (2C) de la vanne, l'axe (22) du perçage (20) du boisseau forme un angle d'environ 10° avec la section droite du corps de vanne (1).

5. Vanne selon l'une des revendications précé-

7   **0 150 643**   8

dentes, caractérisée en ce que le diamètre extérieur du boisseau sphérique (2) est sensiblement égal au diamètre intérieur du corps de vanne (1) à son niveau.

6. Vanne selon l'une des revendications précédentes, caractérisée en ce que la chemise coulissante est en partie basse munie de pièces d'extrémité (36, 4) soumises à la pression du fluide provenant du puits, et offrant une section droite tournée vers le bas supérieure à la section droite tournée vers le haut, si bien que la pression de fluide du puits tend à faciliter la fermeture de la vanne.

7. Vanne selon l'une des revendications précédentes, caractérisée en ce qu'elle comporte une tubulure de commande d'ouverture (60), une tubulure de commande de fermeture (70), un premier piston annulaire (61) solidaire de la chemise de commande (3), coulissant dans le corps de vanne, et soumis à l'action de la tubulure de commande d'ouverture, un second piston annulaire (71) coulissant entre le corps de vanne (1) et la chemise (3), et soumis à l'action de moyens de rappel élastique (65), tendant à l'éloigner du premier piston, et des moyens (72) pour amener la pression de la tubulure de fermeture (70) sur ce second piston (71) par le bas, le second piston venant alors s'appuyer sur un épaulement (31) de la chemise de commande (3) pour faire remonter celle-ci et produire la fermeture de la vanne.

8. Vanne selon la revendication 7, caractérisée en ce que les moyens de rappel élastique (65) sont logés dans une enceinte annulaire étanche (66) mise sous pression d'azote.

9. Vanne selon l'une des revendications précédentes, caractérisée en ce que l'autre portée (5) est solidaire du corps de vanne (1).

10. Vanne selon la revendication 9, caractérisée en ce que ledit boisseau sphérique comporte deux méplats (101-102) et en ce que la chemise (3) supporte le boisseau sphérique (2) à pivotement par l'intermédiaire d'un étrier (35) qui la prolonge, ladite barre (15) évitant cet étrier, ledit étrier ayant deux surfaces planes coopérant avec lesdits méplats (101, 102).

11. Vanne selon l'une des revendications 9 ou 10, caractérisée en ce que ladite portée (4) solidaire de la chemise est positionnée avec une légère précontrainte sur la surface externe (29) du boisseau sphérique.

12. Vanne selon l'une des revendications 9 à 11, caractérisée en ce que le boisseau sphérique (2) et la portée (4) solidaire de la chemise sont agencés pour coopérer à la façon d'une cisaille (2B) lors de la fermeture de la vanne.

13. Vanne selon l'une des revendications 9 à 12, caractérisée en ce que ladite barre (15) est logée de façon imperdable dans le corps de vanne, tout en s'inscrivant en continuité du profil cylindrique externe de celui-ci.

14. Vanne selon l'une des revendications 9 à 13, caractérisée en ce que ladite échancrure (25) est un fraisage réalisé dans la calotte du boisseau sphérique ne participant pas à l'étanchéité par contact avec la portée solidaire de la chemise, en position de fermeture de la vanne.

**Patentansprüche**

1. Ventil, insbesondere zum Absperren eines Bohrlochs der Bauart mit:
– einem Ventilgehäuse (1),
– einem Kugelküken (2), drehbeweglich in dem Ventilgehäuse um eine Achse (21) geführt, die senkrecht zu seiner Bohrung (20) verläuft,
– Steuermitteln, umfassend eine Gleithülse (3), gleitbeweglich in dem Ventilgehäuse (1) zwischen einer Öffnungsposition (2A) und einer Schliessposition (2C) des Ventils und zur Abstützung des Kugelkükens und
– zwei durchbohrten Ventilsitzen (4, 5), von denen einer (4) in Kontakt mit dem Küken (2) bleibt, verbunden mit der Gleithülse (3) ist und abgedichtet ist relativ zum Ventilgehäuse (1), welche beiden Sitze (4, 5) zur Begrenzung eines Durchlasses in dem Ventilgehäuse mit der Bohrung (20) des Kükens ausgebildet sind, wenn sich das Ventil in seiner Öffnungsposition (2A) befindet, dadurch gekennzeichnet, dass nahe dem Kugelküken eine in dem Ventilgehäuse befestigte Querstange (15) parallel zur Drehachse (21) des Kugelkükens befestigt ist, derart, dass sie exzentrisch relativ zu dieser ist und dass das Kugelküken (2) einen radialen Einschnitt (25) aufweist, der sich parallel zu seiner Schwenkachse (21) auf seiner ganzen Breite erstreckt, wobei die Stange (15) und der Einschnitt (25) in reversiblem Nockensteuereingriff bleiben während der Bewegung der Hülse zwischen der Öffnungs- und der Schliessposition und ihre relative Längsbewegung die Schwenkbewegung des Kükens um seine Achse bewirkt.

2. Ventil nach Anspruch 1, dadurch gekennzeichnet, dass in der Schliessposition des Ventils einer der Punkte (45) des Sitzes (4), der in Kontakt mit dem Kugelküken bleibt, in unmittelbarer Nachbarschaft einer Kante (26) der Bohrung (20) des Kugelkükens (2) ist.

3. Ventil nach einem der Ansprüche 1 und 2, dadurch gekennzeichnet, dass die Stange (15) so positioniert ist, dass sie sich nahe der Grenze des Kontaktes mit dem Einschnitt (25) des Kugelkükens befindet, wenn das Ventil in seiner Schliess- oder seiner Öffnungsposition ist.

4. Ventil nach einem der vorangehenden Ansprüche, dadurch gekennzeichnet, dass in der Schliessposition (2C) des Ventils die Achse (22) der Bohrung (20) des Kugelkükens einen Winkel von etwa 10° mit dem Querschnitt des Ventilgehäuses (1) einschliesst.

5. Ventil nach einem der vorangehenden Ansprüche, dadurch gekennzeichnet, dass der Aussendurchmesser des Kugelkükens (2) im wesentlichen gleich dem Innerdurchmesser des Ventilgehäuses (1) auf seiner Höhe ist.

6. Ventil nach einem der voragehenden Ansprüchem dadurch gekennzeichnet, dass die Gleithülse im unteren Teil mit Endstücken (36, 4) versehen ist, die dem Druck des aus dem Bohrloch stammenden Fluids ausgesetzt sind und einen abwärts gekehrten Querschnitt aufweisen, der grösser ist als der aufwärts gekehrte Querschnitt, derart, dass der Bohrlochfluiddruck die Schliessung des Ventils zu erleichtern tendiert.

7. Ventil nach einem der vorangehenden Ansprüche, dadurch gekennzeichnet, dass es ein Öffnungssteuerrohr (60), ein Schliesssteuerrohr (70), einen ersten mit der Gleithülse (3) verbundenen, in dem Ventilkörper gleitbeweglichen und der Wirkung des Öffnungssteuerrohrs unterworfenen ersten Ringkolben (61), einen zweiten in dem Ventilgehäuse (1) und der Hülse (3) gleitbeweglichen Ringkolben (71), unterworfen der Wirkung elastischer Rückstellmittel (65) mit der Tendenz, ihn von dem ersten Kolben zu entfernen, sowie Mittel (72) umfasst zum Einwirkenlassen des Druckes des Schliesssteuerrohres (70) auf diesen zweiten Kolben (71) von unten, so dass der zweite Kolben sich an eine Schulter (31) der Gleithülse (3) anlegt, um diese zu heben und das Schliessen des Ventils zu bewirken.

8. Ventil nach Anspruch 7, dadurch gekennzeichnet, dass die elastischen Rückstellmittel (65) in einem abgedichteten Ringraum (66), der unter Stickstoffdruck steht, untergebracht sind.

9. Ventil nach einem der vorangehenden Ansprüche, dadurch gekennzeichnet, dass der andere Sitz (5) mit dem Ventilgehäuse (1) verbunden ist.

10. Ventil nach Anspruch 9, dadurch gekennzeichnet, dass das Kugelküken zwei Abflachungen (101, 102) aufweist und dass die Hülse (3) das Kugelküken (2) drehbar mittels eines sie verlängernden Bügels (35) abstützt, wobei die Stange (15) an diesem Bügel vorbeigeht und der Bügel zwei plane Oberflächen aufweist, die mit den Abflachungen (101, 102) zusammenwirken.

11. Ventil nach Anspruch 9 oder 10, dadurch gekennzeichnet, dass der mit der Hülse verbundene Sitz (4) mit leichter Vorspannung auf der Aussenoberfläche (29) des sphärischen Kükens positioniert ist.

12. Ventil nach einem der Ansprüche von 9 bis 11, dadurch gekennzeichnet, dass das sphärische Küken (2) und der mit der Hülse verbundene Sitz (4) für das Zusammenwirken nach Art einer Schervorrichtung (2B) während des Schliessens des Ventils ausgebildet sind.

13. Ventil nach einem der Ansprüche von 9 bis 12, dadurch gekennzeichnet, dass die Stange (15) unverlierbar im Ventilgehäuse untergebracht ist, wobei sie sich kontinuierlich in das zylindrische Aussenprofil desselben einpasst.

14. Ventil nach einem der Ansprüche von 9 bis 13, dadurch gekennzeichnet, dass der genannte Einschnitt (25) in die Kalotte des sphärischen Kükens eingefräst ist, die nicht an der Abdichtung durch Kontakt mit dem Sitz, der mit der Hülse verbunden ist, in der Schliessposition des Ventils teilnimmt.

## Claims

1. Valve, in particular for closing a well, of the type comprising:
- a valve body (1)
- a spherical plug (2) guided swivelably in this body around a pin (21) perpendicular to the axis of its bore (20),
- control means comprising a sliding sleeve (3) suitable for sliding inside the valve body (1) between an open position (2A) and a closed position (2C) of the valve and for supporting the spherical plug, and
- two pierced seats (4, 5) of which one (4) remaining in contact with the plug (2), is integral with the sliding sleeve (3) and in a fluid-tight relationship with the valve body (1), the two seats (4, 5) defining a passage in the valve body with the bore (20) of the plug when the valve is in its open position (2A),
said valve being characterized in that, close to the spherical plug, there is a through bar (15) attached in the valve body and mounted parallel to the swiveling pin (21) of the spherical plug, in an offset position with respect to it, and in that the spherical plug (2) has a radial slot (25) which extends parallel to its swiveling pin (21) over its entire width, the bar (15) and the slot (25) remaining in reversible-cam cooperation during the movement of the sleeve between the open position and the closed position, their relative translation movement bringing about the swiveling of the plug around its pin.

2. Valve according to claim 1, characterized in that, in the closed position of the valve, one (45) of the points of the seat (4) which remains in contact with the spherical plug is in the immediate vicinity of the edge (26) of the bore (20) of this same spherical plug (2).

3. Valve according to either of claims 1 and 2, characterized in that the bar (15) is positioned to be on the limit of contact with the slot (25) of the spherical plug when the valve is in its closed position or in its open position.

4. Valve according to any of the preceding claims, characterized in that, in the closed position (2C) of the valve, the axis (22) of the bore (20) of the plug forms an angle of about 10 degrees with the cross section of the valve body (1).

5. Valve according to any of the preceding claims, characterized in that the outer diameter of the spherical plug (2) is substantially equal to the inner diameter of the valve body (1) at its level.

6. Valve according to any of the preceding claims, characterized in that the sliding sleeve is provided at its lower part with endpieces (36, 4) subjected to the pressure of the fluid coming from the well, and offering a downward-facing cross section larger than the upward-facing cross section, so that the well fluid pressure tends to facilitate the closing of the valve.

7. Valve according to any of the preceding claims, characterized in that it includes an opening tube (60), a closing tube (70), a first annular piston (61) secured to the control sleeve (3), sliding in the valve body, and subjected to the action of the opening tube, a second annular piston (71), sliding between the valve body (1) and the sleeve (3), and subjected to the action of elastic return means (65) tending to move it away from the first piston, and means (72) for bringing the pressure of the closing tube (70) on this second piston (71) from below, the second piston then being applied against a shoulder (31) of the control sleeve (3) to raise it and produce the closing of the valve.

8. Valve according to claim 7, characterized in that the elastic return means (65) are housed in a sealed annular chamber (66) placed under nitrogen pressure.

9. Valve according to any of the preceding claims, characterized in that the other seat (5) is integral with the valve body (1).

10. Valve according to claim 9, characterized in that said spherical plug has two flat parts (101-102) and in that the sleeve (3) supports the spherical plug (2) swivelably through a stirrup (35) which extends it, said bar (15) avoiding this stirrup, said stirrup having two flat surfaces cooperating with said flat parts (101, 102).

11. Valve according to either of claims 9 or 10, characterized in that said seat (4) integral with the sleeve is positioned with a slight prestress on the external surface (29) of the spherical plug.

12. Valve according to any of claims 9 through 11, characterized in that the spherical plug (2) and the seat (4) integral with the sleeve are designed to cooperate in the manner of a shear (2B) during the closing of the valve.

13. Valve according to any one of claims 9 to 12, characterized in that said bar (15) is attached in the valve body so it cannot be lost, while remaining flush with its outer cylindrical profile.

14. Valve according to any one of claims 9 to 13, characterized in that said slot (25) is a milling made in the plug's spherical crown which does not participate in the contact sealing with the seat integral with the sleeve when the valve is in a closed position.

FIG.1

0 150 643

FIG.2A  FIG.2B  FIG.2C

8

FIG. 3

80
81
10
70
82
85
32
19
72
65
66
31
98
71A
99

60
83
84
69
61
62
3
78
79
71C
95
94
90
9
11
12
93

30

91

FIG.4A

FIG.4 B